# EUROPÄISCHE PATENTSCHRIFT

(11) **EP 0 624 170 B1**
(45) Veröffentlichungstag und Bekanntmachung des Hinweises auf die Patenterteilung: **26.08.1998**
(21) Anmeldenummer: 93902243.0
(22) Anmeldetag: 22.01.1993
(51) Int. Cl.: C08G 18/34, C08G 18/18, C08G 18/20, C08G 69/00

(54) **VERFAHREN ZUR HERSTELLUNG VON KUNSTSTOFFEN MIT AMID-GRUPPEN**
METHOD OF PRODUCING PLASTICS CONTAINING AMIDE GROUPS
PROCEDE DE FABRICATION DE MATIERES PLASTIQUES PRESENTANT DES GROUPES AMIDE

(30) Priorität: 31.01.1992 DE 4202758; 13.05.1992 DE 4215647; 12.12.1992 DE 4242018
(43) Veröffentlichungstag der Anmeldung: 17.11.1994
(73) Patentinhaber: Henkel Kommanditgesellschaft auf Aktien, 40191 Düsseldorf (DE)
(72) Erfinder: KLUTH, Hermann, D-4000 Düsseldorf 1 (DE); DAUTE, Peter, D-4300 Essen 1 (DE); KLEIN, Johann, D-4000 Düsseldorf (DE); GRÜTZMACHER, Roland, D-5603 Wülfrath (DE); KLAUCK, Wolfgang, D-4005 Meerbusch 2 (DE)
(86) Internationale Anmeldenummer: EP9300145
(87) Internationale Veröffentlichungsnummer: WO9315121

(56) Entgegenhaltungen:
- FR-A- 1 289 074
- GB-A- 908 337
- US-A- 3 557 027
- US-A- 3 620 987
- US-A- 4 016 144

## Beschreibung

Die Erfindung betrifft ein Verfahren zur Herstellung von thermoplastischen oder duroplastischen Kunststoffen mit Amid-Gruppen durch katalytische Umsetzung von Carbonsäuren und mehrwertigen Isocyanaten unter Bildung von CO₂ sowie die so herstellbaren Kunststoffe und deren Verwendung.

Es ist generell bekannt, daß Carboxygruppen bei der Umsetzung mit Isocyanaten Kohlendioxid entwickeln und so zur Treibreaktion in PUR-Kunststoffen beitragen können.

So beschreibt O. Bayer (siehe "Angewandte Chemie" 59, 1947, Seiten 257-288) auf Seite 267 einen Schaumstoff aus a) einem Polyester aus einer Dicarbonsäure und einem dreiwertigen Alkohol, der sowohl noch freie Hydroxyl- als auch Carboxyl-Gruppen enthält, mit b) einem Diisocyanat. Es wurden Schaumstoffe (Handelsbezeichnung MOLTOPREN) von 50 bis 300 kg/m³ erhalten. Im Falle der technisch verwendeten aromatischen Isocyanate ist diese NCO/COOH-Reaktion sehr unübersichtlich und nicht ausreichend für technische Treibreaktionen, d.h. zur Erzielung relativ geringer Rohdichten. Außerdem sind die so hergestellten Polyurethane häufig stark gefärbt.

Eine Verbesserung erfolgte durch die Verwendung von Ameisensäure als Treibmittel, wie es in der DE 32 23 567 beschrieben ist. Dort werden Polyurethan-Schaumstoffe aus Carbonsäuren, Polyolen, Diisocyanaten, tertiären Aminen und Wasser hergestellt. Als Carbonsäure wird Ameisensäure eingesetzt (siehe Beispiele). Auf Wasser als Blähmittel kann gegebenenfalls verzichtet werden (siehe Seite 6, Zeilen 11 bis 27). Als Katalysatoren werden neben metall-organischen Verbindungen auch tertiäre Amine genannt wie Dimethylbenzylamin, Tetramethylethylendiamin, Triethylendiamin, Hexamethylentetramin und Dimethylcyclohexylamin. Es ist nicht ausdrücklich angegeben, bei welchen Temperaturen die Reaktion erfolgt.

Nachteilig bei diesem Verfahren ist die Entwicklung von CO (brennbar, giftig) neben CO₂ als Treibgas. Wie bei wassergetriebenen Schäumen muß die Ameisensäure direkt vor dem Schäumungsprozeß der Polyol-Isocyanat-Mischung zugegeben werden. Außerdem ist die polare Ameisensäure, genau wie Wasser, mit den meisten anderen PUR-Rohstoffen unverträglich.

In der DE 30 41 589 werden gemischte Carbonsäure/Carbaminsäure-Anhydride als Treibmittel zur Herstellung von Schaumkunststoffen beschrieben. Sie werden aus aliphatischen und/oder cycloaliphatischen Isocyanaten mit schwachen Mono- oder Polycarbonsäuren erhalten. Die Anhydride müssen einen Schmelzpunkt von mehr als 40 °C haben. Die CO₂-Entwicklung erfordert Temperaturen von mehr als 100 °C, obwohl die CO₂-Abspaltung teilweise bereits bei ca. 60 bis 70 °C beginnt. Für die eigentliche Treibreaktion werden keine Katalysatoren benötigt. Es können aber Katalysatoren mitverwendet werden, z.B. organische Metallverbindungen, Mannichbasen und auch tertiäre Amine, z.B. n-Methylmorpholin, 1,2-Diazabicyclo-(2,2,2)-octan, Bis-(dimethylaminoalkyl)-piperazin und 1,2-Dimethylimidazol, wobei organische Metallverbindungen (z.B. organische Zinnverbindungen) bevorzugt werden. Es werden halbharte bis harte PUR-Schaumstoffe erhalten mit einer Rohdichte von mindestens 128 kg/m³. Neben der hohen Starttemperatur, die den Einsatz des Treibmittels nur unter großem technischem Aufwand erlaubt, und der hohen Rohdichte zeigt das Verfahren noch folgende Nachteile (s. DE 38 40 817, Seite 2):
"Die gemischten Anhydride sollen einerseits bei Temperaturen von bis ca. 60 °C, auch in Lösung lagerstabil sein und andererseits bereits ab ca. 80 °C unter Freisetzung von Kohlendioxid die Treibwirkung entfalten. Man bewegt sich daher hinsichtlich der Kohlendioxid-Abspalttemperatur auf einem sehr engen Grat. Zur Herstellung der gemischten Anhydride können nur aliphatische Isocyanate eingesetzt werden. Die üblicherweise als Polyisocyanatkomponente verwendeten aromatischen Polyisocyanate sind demgegenüber zur Herstellung der speziellen Treibmittel ungeeignet.

Zur Durchführung des Verfahrens müssen die gemischten Anhydride zunächst in einer separaten Reaktion hergestellt und isoliert und schließlich vorsichtig mit dem Polyolgemisch abgemischt werden. Dies sind zusätzliche Verfahrensschritte, die den Einsatz dieser Verbindungen weiter verteuern und kompliziert erscheinen lassen. Gebrauchsfertige, die genannten Treibmittel enthaltende Polyole können kaum gelagert und gefahrlos transportiert werden, da bei Überhitzungen, die trotz sorgfältiger Handhabung zuweilen auftreten können, die Gefahr eines gefährlichen Druckaufbaus nicht ausgeschlossen werden kann."

Eine ähnliche Reaktion offenbart die US 4,016,144. Darin wird die Umsetzung von Diisocyanaten mit Dicarbonsäuren zu den Anhydriden beschrieben, die bei Temperaturen von 80 bis 325 °C unter Abspaltung von CO₂ in Polyamide übergehen.

Die Patentschriften GB 908 337, FR 908 337 und US 3,620,987 offenbaren ein Verfahren zur Herstellung von Schaumkunststoffen auf der Basis von Polyisocyanaten und Polycarbonsäuren in Gegenwart von speziellen Katalysatoren.

In der DE 26 07 999 werden Schaumstoffe beschrieben, die durch Umsetzung von Hydroxylgruppen aufweisenden organischen Verbindungen mit einem Überschuß an Polyisocyanaten in Gegenwart von Isocyanat-Trimerisierungskatalysatoren, Treibmitteln und gegebenenfalls üblichen Polyurethan-Katalysatoren sowie weiteren Zusatzstoffen erhalten werden, wobei ein Zusatz von 0,001 bis 0,05 Äquivalent einer Carbonsäure pro Äquivalent Isocyanat zu dem Reaktionsgemisch von besonderer Bedeutung ist, wobei die Carbonsäure nicht als eigentliches Treibmittel, sondern zur Modifizierung der Eigenschaften eingesetzt wird. Erfindungsgemäß werden Wasser und/oder leicht flüchtige organische Substanzen als Treibmittel mitverwendet. Als Katalysatoren werden bei der Polymerisationsreaktion solche Verbindungen eingesetzt, die bereits bei Raumtemperatur eine Trimerisierungsreaktion initiieren, z.B. Mannichbasen und sekundäre Amine. Für die Polyurethan-Reaktion werden übliche Katalysatoren eingesetzt wie z.B. N-Methyl-morpholin, 1,4-Diazabicyclo-(2,2,2)-octan, N-Methyl-N'-dimethylaminoethyl-piperazin und 1,2-Dimethylimidazol. Nachteilig ist bei diesem Verfahren, daß Wasser oder flüchtige organische Substanzen als Treibmittel mitverwendet werden müssen. So wurde in allen Beispielen Trichlorfluormethan als Treibmittel verwendet.

In der EP 423 594 wird ein Verfahren zur Herstellung von Formkörpern einer Rohdichte von mindestens 250 kg/m³ aus Polyurethan-Schaumstoffen beschrieben, wozu ein aromatisches Polyisocyanat mit einer organischen Polyhydroxyl-Verbindung in Gegenwart eines Salzes aus einer organischen Carbonsäure mit einer mindestens eine N-H-Bindung aufweisenden Stickstoffbase umgesetzt wird. Auch tertiäre Aminogruppen aufweisende Amine können eingesetzt werden, wenn sie neben der tertiären Aminogruppe noch mindestens eine primäre oder sekundäre Aminogruppe aufweisen, wie beispielsweise N,N-Dimethyl-1,3-propylendiamin. Nachteilig ist, daß ohne weitere Treibmittel nur halbharte bis harte Integral-Schaumstoffe hergestellt werden können.

In der DE 38 40 817 wird ein Verfahren zur Herstellung von Formkörpern aus Polyurethanschaumstoffen und die nach diesem Verfahren erhaltenen Formkörper beschrieben, wobei eine Rohdichte von mindestens 250 kg/m³ erhalten wird. Als Treibmittel werden Carbonsäuren verwendet. Besonders bevorzugt sind Carbonsäuren, die neben der Carboxylgruppe noch mindestens eine weitere gegenüber Isocyanaten reaktionsfähige Gruppe besitzen, wie z.B. Milchsäure und deren wäßrige Lösung. Als Katalysatoren werden tertiäre Amine und metallorganische Verbindungen verwendet. Von Nachteil ist auch hier die relativ hohe Rohdichte der Schäume und eine bevorzugte Temperatur der Formwerkzeuge von 50 °C.

In der GB 863 466 wird die Herstellung eines Schaumstoffes aus a) einem Copolymeren eines konjugierten Diens und einer aliphatischen ungesättigten Carbonsäure mit bis zu 6 C-Atomen und b) einem organischen Polyisocyanat beschrieben. Vorzugsweise wird noch Wasser oder eine Dicarbonsäure zugesetzt, um die Dichte zu beeinflussen. Die Reaktionsgeschwindigkeit wird durch die Temperatur und den Zusatz von Basen geregelt. Als Basen werden konkret genannt: Diphenylamin, Paraphenylendiamin, Diphenylguanidin, Guanidin, Anilin, Benzidin, o,o'-Dichlorbenzidin, Anisidin, Aminopyridin, 2,2-Dipyridylamin, 2-Amino-4,6-dimethylpyridin, Hexamethylentetramin, Hydrazinhydrat, Calciumhydroxid und Ammoniumcarbonat. In den Beispielen liegt die Reaktionstemperatur bei 70 bis 110 °C. Die Reaktion dauert ca. 1 Stunde. Zur Rohdichte werden keine Angaben gemacht.

In verschiedenen Patentschriften der Union Carbide Corporation (z.B. US 4 528 334) werden carboxylierte Polyole beschrieben, die durch Pfropfung von Acrylsäure (3 bis 15 Gew.-%) auf Poly(oxyalkylene) hergestellt werden. Solche Produkte sind inzwischen unter der Bezeichnung UCARMOND im Handel. Der verfügbare Molekulargewichtsbereich beträgt ca. 400 bis 3 000. Ähnliche Produkte werden in der EP 119 349 (Olin Corporation) zur Herstellung von PUR-Dispersionen beschrieben. Allerdings wird hierbei Maleinsäure und/oder Fumarsäure zur Pfropfung verwendet. Die Produkte werden aber auch zur Herstellung von mikrozellularen Polyurethan-Elastomeren verwendet (siehe Proceedings des PUR-World Congresses Sept. 1991, Seiten 686 bis 690). In der dort beschriebenen Anwendung ist zur Erzielung einer ausreichenden Reaktionsgeschwindigkeit eine Vorwärmung der Rohstoffe auf Temperaturen von 33 bzw. 40°C, sowie eine Formentemperatur von 50°C notwendig. Die Dichte der erhaltenen Elastomeren variiert, abhängig vom Anteil aufgepfropfter Säuren, von 160 bis 320 kg/m³.

Die WO 91/00305 (Batelle-Institut) betrifft Kunststoffe auf Fettsäurebasis, wobei Difettsäure-diamide, -diester, -amidester, Monofettsäureamidamine oder Monofettsäureamidalkohole, die wenigstens 2 funktionelle Gruppen enthalten, als Monomerenbaustein dienen. In Beispiel 11 wird die Herstellung elastischer Schaumkunststoffe aus 12-Hydroxystearinsäure und Hexamethylendiisocyanat beschrieben. Die Reaktion findet erst bei höheren Temperaturen statt (150°C). Über die Rohdichte des erhaltenen Schaumstoffes werden keine Angaben gemacht.

In der deutschen Patenanmeldung DE 41 20 432 werden Dihydroxyfettsäuren beschrieben, die sich als Baustein für Polyurethan-Systeme eignen. Als Anwendungsbereich wird die Herstellung wäßriger Polyurethandispersionen beschrieben, wobei vorzugsweise nichtaromatische Isocyanate verwendet werden und die Carboxylgruppe nicht mit der NCO-Gruppe reagiert.

Zusammenfassend kann gesagt werden, daß die Verwendung von Carbonsäuren als Treibmittel für PUR-Systeme bisher große Nachteile aufwies, insbesondere die Anwendung höherer Temperaturen, eine unzureichende Treibwirkung, hohe Rohdichten, unvollständige Reaktitionen, die Entstehung giftiger und brennbarer Gase. Diese stehen einer technischen Anwendung im Wege, wie es auch in der DE 30 41 589 angegeben ist.

Hiervon ausgehend soll ein Verfahren bereitgestellt werden, daß die erwähnten Nachteile nicht oder allenfalls in stark vermindertem Umfang hat. Insbesondere soll es möglich sein, auf einfachem Wege Kunststoffe, insbesondere mit poröser Struktur (Schaumstoffe) herzustellen, ohne daß man das Ausgangsreaktionsgemisch erwärmen muß. In besonderen Fällen sollte allenfalls eine geringfügige Erwärmung genügen. Innerhalb technisch anwendbarer Zeiten soll die Reaktion praktisch beendet sein.

Die erfindungsgemäße Lösung ist den Patentansprüchen zu entnehmen. Sie beruht vor allem auf der Auswahl von bestimnten Katalysatoren für die Reaktion von Carbonsäuren und Isocyanaten bei relativ niedrigen Temperaturen. Die dadurch erhaltene CO₂-Abspaltung ist so intensiv, daß auf konventionelle Treibmittel wie Fluorkohlenwasserstoffe und Wasser sogar ganz verzichtet werden kann, wenn sie zur Porenbildung genutzt wird. Ein weiterer Vorteil der erfindunsgemäBen Lösung ist der praktisch vollständige Einbau der verwendeten Carbonsäure in das Polymergerüst, verbunden mit einer hohen, fast quantitativen Kohlendioxidausbeute.

Die Erfindung beruht auch auf der Entdeckung, daß aus bestimmten Hydroxycarbonsäuren bzw. Carbonsäuren und Polyolen mit Polyisocyanaten schon bei Raumtemperatur überraschend glatt feinzellige Schaumstoffe in kurzer Zeit erhalten werden, wenn bestimmte tertiäre Amine anwesend sind. Ihre Rohdichte kann aufgrund dieser Porenstruktur durch gezielte Katalyse sowie Steuerung der OH-Zahl und Säurezahl im Bereich von 25 bis 800 kg/m³, vorzugsweise von 30 bis 250 kg/m³ und insbesondere von 40 bis 80 kg/m³ variiert werden.

Es ist jedoch auch möglich, Kunststoffe mit hohen Rohdichten herzustellen, indem man die Bildung eines stabilen Porensystems verhindert, z.B. indem man die Reaktion unter Druck oder unter Rühren ablaufen läßt. Dann werden Kunststoffe mit Rohdichten von allenfalls 25 % unter denen der porenfreien Kunststoffe erhalten.

Das erfindungsgemäße Verfahren zur Herstellung von thermoplastischen oder duroplastischen Kunststoffen mit Amid-Gruppen besteht in der katalytischen Umsetzung von
A) mehrwertigen aliphatischen, cycloaliphatischen oder aromatischen Isocyanaten und/oder daraus hergestellten oligomerisierten Produkten mit NCO-Endgruppen mit
B) Carbonsäuren sowie gegebenenfalls
C) Alkoholen oder mehrwertigen primären oder sekundären Aminen, wobei zumindest B) oder C) mehrwertig sein muß und/oder B) und C) zu einer Hydroxycarbonsäure bzw. Aminocarbonsäure verbunden sind, in Gegenwart von tertiären Aminen als Katalysator bei Temperaturen von unter 100 °C unter Abspaltung von CO_{2,} wobei die tertiären Amine erfindungsgemäß Aminosubstituierte Pyridine und/oder N-substituierte Imidazole sind. Derartige Amine sind bekannt (s. H. Beyer, Lehrbuch der organischen Chemie, 18. Auflage, S. 613).

Unter "Kunststoffen" werden Materialien verstanden, deren wesentliche Bestandteile aus makromolekularen organischen Verbindungen bestehen. Wenn sie über ihre ganze Masse verteilt offene und/oder geschlossene Poren enthalten und ihre Rohdichte daher mehr als 25 % niedriger als die des gerüstbildenden Kunststoffes ist, werden sie "Schaum-Kunststoffe" oder kurz "Schaumstoffe" genannt.

Unter "Carbonsäuren" werden Säuren verstanden, die eine oder mehrere Carboxyl-Gruppen (-COOH) enthalten. Die Carboxyl-Gruppen können mit gesättigten, ungesättigten und/oder verzweigten Alkyl- oder Cycloalkyl-Resten oder mit aromatischen Resten verbunden sein. Sie können weitere Gruppen wie Ether-, Ester-, Halogen-, Amid-, Amino-Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOH-terminierte Polyester, Polyether oder Polyamide, Dimerfettsäuren und Trimerfettsäuren. Konkrete Beispiele für die erfindungsgemäßen Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt: Adipinsäure, Sebacinsäure, Isophthalsäure, Terephthalsäure, Trimellitsäure, Phthalsäure, Hexahydrophthalsäure, Tetrachlorphthalsäure, Oxalsäure, Mukonsäure, Bernsteinsäure, Fumarsäure, Ricinolsäure, 12-Hydroxy-stearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Komplexester von Polycarbonsäuren oder Carbonsäuregemischen, die sowohl COOH- als auch OH-Gruppen besitzen, eingesetzt werden wie Ester von TMP [C₂H₅-C(CH₂OH)₃], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zukker, Stärke, Cellulose) und Ringöffnungsprodukte von Epoxiden mit Polycarbonsäuren.
Bevorzugt werden Carbonsäuren mit mindestens 2 C-Atomen, insbesondere mit 5 bis 400 C-Atomen.

Unter "Hydroxycarbonsäuren" sind Monohydroxymonocarbonsäuren, Monohydroxypolycarbonsäuren, Polyhydroxymonocarbonsäuren und Polyhydroxypolycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten.

Die Polyhydroxymonocarbonsäuren und die Polyhydroxypolycarbonsäuren werden zu den Polyhydroxyfettsäuren zusammengefaßt.

Erfindungsgemäß verwendbare Polyhydroxyfettsäuren können zweckmäßigerweise dadurch hergestellt werden, daß zunächst Ester ungesättigter Fettsäuren epoxydiert und dann die Epoxide unter Basen- oder Säurekatalyse mit einem Überschuß einer wasserstoffaktiven Verbindung, insbesondere a) einer hydroxylhaltigen Verbindung, z.B. einer Hydroxycarbonsäure, eines aliphatischen Polyols oder b) mit carboxylgruppenhaltigen Verbindungen, insbesondere mehrwertigen Carbonsäuren und/oder c) Wasser unter Ringöffnung und ggf. Umesterung umgesetzt werden. Die Reaktionsmischung wird dann bei Temperaturen zwischen 20°C und 60°C mit Alkalihydroxiden versetzt und anschließend bei Temperaturen zwischen 80 °C und 110 °C zu den Polyhydroxyfettsäuren verseift. Werden die Hydroxycarbonsäuren, die aliphatischen Polyole und/oder Wasser bei der Epoxidringöffnung stöchiometrisch oder im Unterschuß eingesetzt, so kommt es auch zu Vernetzungsreaktionen, bei denen Polyhydroxypolyfettsäuren entstehen, die im Sinne der Erfindung auch unter den Begriff Polyhydroxyfettsäuren fallen.

Die vorzugsweise verwendeten Dihydroxyfettsäuren sowie ihre Herstellung werden in der DE-OS 33 18 596 und der EP 237 959 beschrieben, auf die ausdrücklich Bezug genommen wird.

Die erfindungsgemäßen Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen werden natürliche Fettsäuren meistens als technische Mischungen eingesetzt. Diese Mischungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile oder aber Polyhydroxyalkoxycarbonsäuren mit Doppelbindungen enthalten können. Geeignet sind hier also nicht nur die reinen Polyhydroxyfettsäuren, sondern auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40 %, bevorzugt > 60 %, aufweisen. Beispiele hierfür sind käuflich erhältliche, natürliche Rohstoffe wie z.B. Rindertalg mit einer Kettenverteilung von 67 % Ölsäure, 2 % Stearinsäure, 1 % Heptadecansäure, 10 % gesättigte Säuren der Kettenlänge C₁₂ bis C₁₆, 12 % Linolsäure und 2 % gesättigte Säuren >C₁₈ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Diese Produkte können nach Ringöffnung kurz destilliert werden, um die ungesättigten Fettsäureesteranteile zu reduzieren. Weiterführende Reinigungsschritte (z.B. länger anhaltende Destillation) sind ebenfalls möglich.

Bevorzugt leiten sich die erfindungsgemäßen Polyhydroxyfettsäuren von einfach ungesättigten Fettsäuren ab, z.B. von 4,5-Tetradecensäure, 9,10-Tetradecensäure, 9,10-Pentadecensäure, 9,10-Hexadecensäure, 9,10-Heptadecensäure, 6,7-Octadecensäure 9,10-Octadecensäure, 11,12-Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cis- als auch trans-Isomere von allen genannten Fettsäuren sind geeignet.

Geeignet sind auch Polyhydroxyfettsäuren, die sich von weniger häufig vorkommenden ungesättigten Fettsäuren herleiten, wie Decyl-12-ensäure, Stilingasäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13-Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Auch mehrfach ungesättigte Fettsäuren sind geeignet, z.B. Linolsäure, Linolensäure und Ricininsäure.
Als konkretes Beispiel für eine aromatische Carbonsäure sei die Zimtsäure genannt und als Beispiel für eine Polycarbonsäure die Weinsäure und die Zitronensäure.

Der Hydroxyalkoxyrest der Polyhydroxyfettsäuren leitet sich von dem Polyol ab, das zur Ringöffnung des epoxydierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutadiendiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z.B. Glycerin und Trimethylolpropan sowie deren Addukte von Ethylenoxid und/oder Propylenoxid mit Molekulargewichten bis zu 1 500. Es werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z.B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppen-tragende Amine bzw. Amincarbonsäuren zur Ringöffnung eingesetzt werden.

Bevorzugt werden jedoch Dihydroxyfettsäuren, insbesondere aus Diolen. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechenden Ringöffnungsprodukte mit Diolen und deren Vernetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestens 6, CH₂-Einheiten von der Carboxygruppe getrennt.
Bevorzugte Dihydroxyfettsäuren sind:
9,10-Dihydroxypalmitinsäure, 9,10-Dihydroxystearinsäure und 13,14-Dihydroxybehensäure sowie deren 10,9- bzw. 14,13-Isomere.

Zur Herstellung der erfindungsgemäßen Polyhydroxyfettsäuren können epoxydierte Carbonsäureester, z.B. epoxydierte Fettsäuremethyl-, -ethyl-, -propyl- oder -glycerinester mit Wasser und/oder den Polyolen, von denen sich die Hydroxyalkoxygruppe ableiten soll, unter Ringöffnungs- und gewünschtenfalls Umesterungsbedingungen umgesetzt werden. Dazu können bekannte Verfahren herangezogen werden. Es ist bevorzugt, das zur Umsetzung vorgesehene Polyol und/oder Wasser bzw. die Hydroxycarbonsäure zusammen mit einem basischen oder sauren Katalysator - etwa einer starken Mineralsäure - vorzulegen und bei einer Reaktionstemperatur zwischen 80 °C und 120 °C oder basisch bei 200 °C das epoxydierte Fettsäurederivat kontinuierlich oder portionsweise zuzugeben. Das Fortschreiten der Reaktion kann durch Titration des Restepoxidgehalts oder mittels spektroskopischer Methoden überwacht werden. Wenn die Epoxidgruppen umgesetzt sind, wird der Katalysator durch Neutralisation zerstört. Die so entstandenen Polyhydroxyfettsäureester können gegebenenfalls destillativ von überschüssigem Reaktionspartner befreit werden.

In einer zweiten Stufe wird dann üblicherweise die Verseifung der Polyhydroxyfettsäureester zu den Polyhydroxyfettsäuren durchgeführt. Die Verseifung wird vorzugsweise bei Temperaturen zwischen 40°C und 120°C in Gegenwart von Wasser unter basischer Katalyse durchgeführt. Geeignete Basen sind die Hydroxide der Alkali- und/oder Erdalkalimetalle sowie tertiäre Amine. Die Polyhydroxyfettsäuren fallen nach dieser Reaktionsstufe als Salze (Seifen) an und können durch Versetzen mit starken Säuren, z.B. Salzsäure oder Schwefelsäure gewonnen werden. Dabei ist es möglich, die Reaktionsprodukte durch einfaches oder gewünschtenfalls mehrfaches Waschen mit Wasser zu reinigen. Prinzipiell ist auch eine Druckspaltung der Ester, insbesondere der Triglyceride mit Wasser in Abwesenheit von Katalysatoren möglich.

Unter "Alkoholen" sind Hydroxyl-Derivate von aliphatischen und alicyclischen gesättigten, ungesättigten und/oder verzweigten Kohlenwasserstoffen zu verstehen. Es kommen sowohl 1- als 2- oder höherwertige Alkohole in Frage. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Pentanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die reduzierten Dimer- und Trimer-Fettsäuren sowie höhere Polyethylen-, Polypropylen- und Polybutylenglykole.

Zur Herstellung von hochmolekularen Verbindungen kommen weitere in der PUR-Chemie an sich bekannte organische Polyhydroxyl-Verbindungen in Frage. In Betracht kommen insbesondere die an sich bekannten Polyhydroxy-Polyether des Molekulargewichts-Bereichs von 60 bis 10 000, vorzugsweise 70 bis 6 000 mit 2 bis 10 Hydroxylgruppen pro Molekül. Derartige Polyhydroxy-Polyether werden in an sich bekannterweise durch Alkoxylierung von geeigneten Startermolekülen erhalten, z.B. von Wasser, Propylenglykol, Glycerin, Trimethylolpropan, Sorbit, Rohrzucker, Aminoalkohole wie Ethanolamin oder Diethanolamin oder liphatischer Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid.
Ebenso kommen für die Schaumstoff-Herstellung die üblichen Polyester-Polyole des Molekulargewichts-Bereiches von 400 bis 10 000 in Frage, wenn sie 2 bis 6 Hydroxylgruppen enthalten. Geeignete Polyester-Polyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure, Dimer- und Trimerfettsäure oder beliebigen Gemischen derartiger Säuren.
Ferner kommen auch Polycarbonat-Polyole in Frage.

Verwendet werden können auch a) Partialester von gesättigten und ungesättigten Fettsäuren mit Polyhydroxyverbindungen sowie deren eth- oder propoxylierte Derivate, b) gesättigte und ungesättigte Fettalkohole, c) Stärke, Zucker und Cellulose sowie deren Derivate, d) Ringöffnungsprodukte von epoxidierten Triglyceriden oder Fettsäureestern mit Alkoholen, Carbonsäuren, Aminen und Wasser sowie entsprechende alkoxylierte Derivate und e) Ricinusöl oder Ricinusölderivate.

Anstelle von Alkoholen können auch mehrwertige primäre oder sekundäre Amine als Kettenbausteine eingesetzt werden, ebenso auch Aminocarbonsäuren und niedermolekulare Eiweißverbindungen. Konkret seien genannt: Polyoxyethylen-, Polyoxypropylen- und Polyoxybutylen-diamin mit Molekulargewichten bis zu 5 000 bzw. Glycin, Alanin, Valin, Leucin, Cystein, Cystin, Asparginsäure, Glutaminsäure, Tyrosin, Tryptophon, eta-Amino-capronsäure, 11-Amino-undecansäure, 4-Amino-buttersäure, Mono- und -Di-amino-naphthoesäure.

Zur Herstellung von Kunststoffen werden mehrfunktionelle aromatische und aliphatische Isocyanate und/oder daraus hergestellte oligomerisierte Produkte mit NCO-Gruppen eingesetzt.
Mit "mehrfunktionell" ist eine Funktionalität der Isocyanat-Komponente von größer als 1,5 gemeint. Die Isocyanat-Komponente kann auch ein Gemisch von Isocyanaten sein, wobei auch streng monofunktionelle Isocyanate mitverwendet werden können, z.B. Phenylisocyanat.

Vorzugweise enthalten die geeigneten mehrfunktionellen Isocyanate im Mittel 2 bis höchstens 5, vorzugsweise bis 4 NCO-Gruppen. Beispielsweise seien als geeignete Isocyanate genannt Phenylisocyanat, 1,5-Naphthylendiisocyanat, 4,4'-Diphenylmethandiisocyanat (MDI), hydriertes MDI (H₁₂MDI), Xylylendiisocyanat (XDI), m- und p-Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell oder vollständig umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure. Vorzugsweise besteht die Isocyanatkomponente a) zu mehr als 30 Gew.-%, insbesondere zumindest überwiegend, vorzugsweise vollständig, aus aromatischen Isocyanaten wie MDI.

Im allgemeinen werden aromatische Isocyanate bevorzugt, ebenso oligomerisierte NCO-endständige Addukte aus den oben genannten Isocyanaten und Polyolen, Polyaminen oder Aminoalkoholen. Jedoch vermögen - wider Erwarten - auch aliphatische und cycloaliphatische Isocyanate schon bei Raumtemperatur schnell und vollständig zu reagieren.

Für den Fall, daß die mehrwertigen Isocyanate mit Polyhydroxyfettsäuren umgesetzt werden, sollte das Äquivalent-Verhältnis von Isocyanat-Gruppen (NCO) zu Gruppen mit aktivem Wasserstoff (AKH) 2 : 1 bis 0,5 : 1, vorzugsweise 1,5 : 1 bis 0,6 : 1 betragen. Sofern neben den beschriebenen Reaktionen mit Verbindungen mit aktivem Wasserstoff noch eine Trimerisierung von überschüssigen Isocyanatgruppen gewünscht wird, kann das Verhältnis von NCO : aktivem Wasserstoff auch bis zu 5 : 1 betragen.

Die erfindungsgemäßen Katalysatoren sind dadurch gekennzeichnet, daß sie durch ihre Fähigkeit, positive Ladungen zu stabilisieren. eine hohe Nucleophilie besitzen.

Die erfindungsgemäßen Katalysatoren sind Amino-substituierte Pyridine und/oder N-substituierte Imidazole.

Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholino-pyridin, 4-Methylpyridin und N-Dodecyl-2-Methyl-imidazol.

Die obengenannten Ausgangsstoffe und Katalysatoren werden in folgenen Mengenverhältnissen eingesetzt: Auf ein Äquivalent Isocyanat kommen 0,1 bis 5, vorzugsweise 0,1 bis 2 Äquivalente einer Mischung aus Carbonsäure und Alkohol und 0,0001 bis 0,5, vorzugsweise 0,001 bis 0,1 Äquivalente Amin, wobei das Verhältnis Alkohol : Säure 20 : 1 bis 1 : 20 betragen kann. Für den Fall, daß kein Alkohol oder mehrwertiges Amin an der Reaktion beteiligt ist, also die Isocyanate mit den Carbonsäuren umgesetzt werden, gilt die Regel: Auf ein Äquivalent Isocyanat kommen 0,1 bis 4, vorzugsweise 0,8 bis 1,4 Äquivalente Carbonsäure und 0,0001 bis 0,5, vorzugsweise 0,001 bis 0,1 Äquivalente tertiäres Amin.

Die stöchiometrische Zusammensetzung und die Auswahl der Reaktanten beeinflußt auch die Vernetzungsdichte. Auf bekannte Weise kann daher der Fachmann sowohl thermoplastische als auch duroplastische Kunststoffe herstellen.

Für den Fall, daß die mehrwertigen Isocyanate überwiegend mit Hydroxycarbonsäuren umgesetzt werden, sollen die Amine vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den erfindungsgemäßen tertiären Aminen können noch weitere Katalysatoren zugesetzt werden, vor allem metallorganische Verbindungen wie Zinn(II)salze von Carbonsäuren, starke Basen wie Alkali-Hydroxide, -Alkoholate und -Phenolate, z.B. Di-n-octyl-Zinn-mercaptid, Dibutylzinn-maleat, -diacetat, -dilaurat, -dichlorid, -bisdodecyl-mercaptid, Zinn-II-acetat, -ethylhexoat und -diethylhexoat oder Blei-phenyl-ethyl-dithiocarbaminat. Die metallorganischen Katalysatoren können auch alleine eingesetzt werden, wenn bestimmte Carbonsäuren verwendet werden, nämlich Hydroxy- und Amino-Carbonsäuren. Als Trimerisierungs-Katalysator sei DABCO, TMR-2 usw. der Fa. Air Products genannt, wobei es sich um in Ethylglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl-und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungs-Produkte, Diaza-bicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin. N,N,N,N-Tetramethylpropan-1,3-diamin, N,N,N,N-Tetramethylhexan-1,6-diamin.

Vorzugsweise werden jedoch neben den erfindungsgemäßen tertiären Aminen Heteroatomen eingesetzt, insbesondere wenn sie mindestens ein Stickstoffatom im Ring und weitere Heteroatome oder funktionelle Gruppen, die einen positiven induktiven oder/und positiven mesomeren Effekt ausüben (H.R. Christen, Grundlagen der org. Chemie, 4. Aufl. 1977, S. 378 ff) enthalten. So üben z.B. Alkylgruppen einen schwachen positiven induktiven (+ I) Effekt aus. Aminogruppen können durch das freie Elektronenpaar einen starken positiven mesomeren (+ M) Effekt hervorrufen. Bevorzugte Katalysatoren sind also heteroaromatische Amine, die Substituenten mit + I- und/oder + M-Effekten, insbesondere weitere Heteroatome tragen, und daher positive Ladungen besonders gut stabilisieren können. Zu nennen sind: Derivate von Pyrrol, Indolizin, Indol, Isoindol, Benzotriazol, Carbazol, Pyrazol, Imidazol, Oxazol, Isooxazol, Isothiazol, Triazol, Tetrazol, Thiazole, Pydridin, Chinolin, Isochinolin, Acridin, Phenantridin, Pyridazine, Pyrimidine, Pyrazin, Triazine und Verbindungen, die entsprechende Strukturelemente enthalten.
Die Katalysatoren können auch in oligomerisierter oder polymerisierter Form vorliegen, z.B. als N-methyliertes Polyethylenimin.

Es kann zweckmäßig sein, im Falle von aliphatischen tertiären Aminen als zusätzliches Treibmittel und Kettenverlängerungsmittel Wasser zu verwenden. Es können aber auch alle anderen bekannten Kettenverlängerungsmittel zugesetzt werden:
- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bis-hydroxymethyl-cyclohexan, Dioxyethoxyhydrochinon, Terephthalsäure-bis-glykolester, Bernsteinsäure-di-2-hydroxyethylamid, Bernsteinsäure-di-N-methyl-(2-hydroxy-ethyl)amid, 1,4-Di(2-hydroxy-methyl-mercapto)-2,3,5,6-tetrachlorbenzol, 2-Methylpropandiol-(1,3);
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins. Weiterhin auch Carbohydrazide oder Hydrazide von Dicarbonsäuren.
- Aminoalkohole wie Ethanolamin, Propanolamin, Butanolamin, N-Methyl-ethanolamin, N-Methyl-isopropanolamin; Diethanolamin, Triethanolamin sowie Di- oder Trialkanolamine sowie deren Alkoxylierungsprodukte.
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren.

Außerdem können dem Reaktionsgemisch noch übliche Additive wie Füllstoffe, Fasern, Pigmente, Weichmacher, Schaumstabilisatoren, Zellregler, Flammschutzmittel, Alterungsschutzmittel, Bitterstoffe und Fungizide zugesetzt werden.

Die Reaktionstemperatur für den Start der CO₂-Abspaltung liegt unter 100 °C, vorzugsweise unter 50 °C, insbesondere unter 35 °C. Insbesondere brauchen auch die Formen nicht erwärmt zu werden. Es genügt, die Reaktanten bei diesen Temperaturen zu mischen bzw. die Mischung auf diese Temperatur durch Zufuhr externer Wärme zu bringen.

Vorzugsweise startet die Umsetzung bei Raumtemperatur, also bei 20 °C +/-15. Es kann vorteilhaft sein, das Reaktionsausgangsgemisch auf 30 bis 70 °C zu erwärmen, um z.B. die Rohdichte zu senken und die Reaktion zusätzlich zu beschleunigen. Es kann aber auch bei bestimmten Zusammensetzungen bei Temperaturen deutlich unter 5 °C geschäumt werden, z.B. mit Imidazolderivaten oder Dimethylaminopyridinderivaten.

Die Reaktionszeit kann vor allem durch Auswahl der Katalysatoren und deren Konzentration in weiten Bereichen variiert werden und damit dem jeweiligen Anwendungszweck angepaßt werden. Sie beträgt ohne Erwärmung weniger als 24, vorzugsweise weniger als 2 und insbesondere weniger als 0,5 Stunden, angefangen vom Mischen der Reaktanten bis zur praktisch vollständigen Aushärtung. Es können bei Raumtemperaturen (20 ± 15 °C) aber auch Reaktionszeiten von weniger als 15 Sekunden ausreichen.

Im allgemeinen werden die Reaktanten, also das Isocyanat und die Carbonsäure bzw. die Hydroxycarbonsäure, die Aminocarbonsäure und gegebenenfalls der Alkohol und das mehrwertige Amin sowie das tertiäre Amin gleichzeitig zusammengegeben, ohne daß sie vorher miteinander reagiert haben. Dann wird dieses Gemisch weiterbearbeitet, z.B. in offenen Formen oder auf Bandanlagen zu Blöcken oder Sandwich-Elementen. Es kann aber auch auf ein Substrat gesprüht, gegossen oder gestrichen werden und dort eine bleibende Isolierschicht erzeugen. Das erfindungsgemäße Verfahren kann also u.a. zur Beschichtung, insbesondere zur Lackierung von Substraten verwendet werden. Bei der Herstellung in geeigneten Kesseln kann durch Entgasen und/oder Zerrühren des Schaumes ein nahezu ungeschäumter Kunststoff hergestellt werden, der nach bekannten Methoden zu Formkörpern weiterverarbeitet werden kann.

Es ist aber auch möglich, daß man einzelne Komponenten ganz oder teilweise vorher miteinander mischt oder reagieren läßt, z.B. eine Mischung aus Carbonsäure und Alkohol oder eine Mischung aus Carbonsäure und Isocyanat oder eine Mischung aus Carbonsäure und Amin.

Die erfindungsgemäße Zusammensetzung eignet sich sehr gut, nach der RIM-Technik verarbeitet zu werden. Dazu werden die Komponenten rasch dosiert und gemischt und das Gemisch in die Form (Werkzeug oder Hohlräume) injiziert, worin es je nach der Temperatur der Form bzw. des Reaktionsgemisches in Sekunden bis Minuten aushärtet. Auf diese Weise können gängige Formteile aus Integralschaumstoff hergestellt werden.
Es ist z.B. auch möglich, Gießmassen nach dem erfindungsgemäßen Verfahren herzustellen.

Bevorzugt wird jedoch ein Schaumstoff hergestellt. Dabei ist die Verwendung von Schaumstabilisatoren zweckmäßig, z.B. von Schaumstabilisatoren auf der Basis von Siloxan-Oxyalkylen-Copolymerisaten. Es können aber auch andere, silikonfreie Stabilisatoren verwendet werden z.B. LK-221 (OHZ: 40,5), LK-332 (OHZ: 35) und LK-443 (OHZ: 44) der Fa. Air Products oder auch überhaupt keine. Überraschend ist darüber hinaus, daß die Schaumstoffe eine Rohdichte von höchstens 800, vorzugsweise höchstens 250, insbesondere höchstens 80 g/l haben können.

Die erhaltenen Kunst- bzw. Schaumstoffe können sich durch eine geringe Säurezahl von weniger als 40, insbesondere weniger als 10 auszeichnen.

Die Schaumstoffe haben neben der Amidgruppe noch Harnstoff-Gruppen, wenn mehrwertige Isocyanate mit Amin-Gruppen oder mit H₂O reagieren. Sie enthalten zusätzlich zu Amid-Gruppen noch Urethan-Gruppen, wenn mehrwertige Isocyanate mit Polyolen oder mit Polyhydroxycarbonsäuren reagieren; und sie enthalten neben Amid-Gruppen noch Ester-, Harnstoff- und Urethan-Gruppen, wenn die mehrwertigen Isocyanate mit Carbonsäuren und Alkoholen reagieren.

Weitere Vorteile sind, daß neben harten und halbharten Kunststoffe und Schaumstoffe auf einfache Weise auch weiche Kunststoffe und Schaumstoffe hergestellt werden können. Sie sind gut geeignet zur Herstellung von Spritzgußteilen wie z.B. von Tassen, Tellern und Gehäusen oder zur Herstellung von Fasern und Folien. Sie eignen sich auch zur Herstellung von offenzelligem Schaumstoff, aus dem dann z.B. Filter herstellbar sind.

Für die Praxis ist es von besonderer Bedeutung, daß die Schäumungsgeschwindigkeit durch die Katalysatorkonzentration in gewissem Ausmaß beeinfluß werden kann. Gleiches gilt auch für die Rohdichte. Daher eignen sich die erfindungsgemäßen Schaumstoffe insbesondere zur Herstellung von Zweikomponenten-Bau- und Montage-Schaumstoff. Vorteilhaft ist in diesem Falle auch das verbesserte Brandverhalten von Schaumstoffen aus Polyhydroxycarbonsäuren.

Die erfindungsgemäßen Schaumstoffe eignen sich sehr gut zur Verwendung als Zweikomponenten-Bau- und Montage-Schaumstoff, insbesondere dann wenn ihre Rohdichte unter 100 kg/m³, vorzugsweise zwischen 25 und 50 kg/m³ liegt.
Die niedrige Rohdichte spielt auch bei der Verwendung zum Isolieren und Verpacken eine wichtige Rolle. Sie sollte in diesem Fall unter 70 kg/m³ liegen.

Stellt man nach den dem Fachmann bekannten Prinzipien durch Variation der Stöchiometrie (hoher Vernetzungsgrad) und unter Zusatz von zellöffnenden Additiven (z.B. Silikonen) den Schaum derart her, daß eine vorzugsweise offenzellige und spröde Struktur resultiert, so kann dieser Schaumstoff auch als Blumensteckschaum verwendet werden.

Nach dem erfindungsgemäßen Verfahren können auch ohne Flammschutzmittel große, harte oder elastische Blöcke mit einer Höhe, Breite und Tiefe von jeweils mindestens 0,5 m hergestellt werden, die sich besonders zur Herstellung von Isolierplatten, Modellbauplatten, Sandwichelementen, Matratzen oder zu Schäumen zum Modellieren eignen.

Das erfindungsgemäße Verfahren eignet sich auch zur Herstellung von Kleb- und Dichtstoffen, die beim Auftragen schäumen und sich somit durch eine besonders hohe Spaltüberbrückung auszeichnen.

Die Erfindung wird nun im einzelnen erläutert.

### A: Beispiele zu dem System: mehrwertiges Isocyanat + mehrwertige Carbonsäure

Umsetzung verschiedener Polycarbonsäuren mit MDI bei Raumtemperatur sowie die erhaltenen Rohdichten. Feststoffe werden in Ethanol gelöst, falls keine anderen Angaben gemacht werden.
a)

| | | |
|---|---|---|
| Ansatz | 15 g | Dimerfettsäure (Empol 1016, SZ = 192) |
| | 0,92 g | Silikontensid (Tegostab B 8404) |
| | 7,88 g | MDI (Desmodur VKS) |

| Katalysator | Menge (g) | Rohdichte (g/l) | Startzeit (sek) |
|---|---|---|---|
| - erfindungsgemäße Beispiele | | | |
| 1 Methylimidazol | 0,12 | 53.5 | 59 |
| 4-Dimethylaminopyridin | 0,24 | 85.3 | 105 |

| - Vergleichsbeispiele (33 %ige Lösung) | | | |
|---|---|---|---|
| Tributylamin | 0,12 | 281.2 | > 240 |
| Dimethylbenzylamin | 0,12 | 242.6 | > 240 |
| 2,2'-Dimorpholinodiethylether | 0,12 | 289.2 | > 240 |
| N,N'-Dimethylpiperazin | 0,2 | 241.4 | > 240 |
| 2-(2-Dimethylaminoethoxy)ethanol | 0,12 | 359.8 | > 240 |
| Morpholin | 0,12 | 507.8 | > 240 |

b)

| | | |
|---|---|---|
| Ansatz | 15,9 g | Trimerfettsäure (VT 213, SZ = 181) |
| | 0,92 g | Silikontensid (Tegostab B 8404) |
| | 7,9 g | MDI (Desmodur VKS) |
| | | Katalysator |

| Katalysator | Menge (g) | Rohdichte (g/l) | Startzeit (sek) |
|---|---|---|---|
| - erfindungsgemäße Beispiele | | | |
| 1-Methylimidazol | 0,12 | 70.9 | 90 |
| 4-Dimethylaminopyridin (33 %ige Lösung) | 0,36 | 87.4 | > 240 |

| - Vergleichsbeispiele | | | |
|---|---|---|---|
| Tributylamin | 0,12 | 217.1 | > 240 |
| Dimethylbenzylamin | 0,12 | 221.2 | > 240 |
| 2,2-Dimorpholinodiethylether | 0,12 | 236.4 | > 240 |
| 2-(2-Dimethylaminoethoxy)ethanol | 0,12 | 189.6 | > 240 |
| Morpholin | 0,12 | 453.6 | > 240 |
| Pyridin | 0,12 | 143,5 | > 240 |

c)

| | | |
|---|---|---|
| Ansatz | 15 g | Adipinsäure/1,2-Propandiol-Polyester (4:3, SZ = 178) |
| | 0,92 g | Silikontensid (Tegostab B 8404) |
| | 7,88 g | MDI (Desmodur VKS) |
| | | Katalysator |

| Katalysator | Menge (g) | Rohdichte (g/l) | Startzeit (sek) |
|---|---|---|---|
| - erfindungsgemäße Beispiele | | | |
| 1-Methylimidazol | 0,12 | 57.5 | 50 |
| 4-Dimethylaminopyridin (33 %ige Lösung) | 0,12 | 69.1 | 70 |
| 4-Dimethylaminopyridin (33 %ige Lösung) | 0,36 | 54.8 | 34 |
| 4-Pyrrolidinopyridin (50 %ige Lösung) | 0,12 | 71.6 | 70 |

| - Vergleichsbeispiel | | | |
|---|---|---|---|
| 2-(2-Dimethylaminoethoxy)ethanol | 0,12 | 162.7 | |

d)

| | | |
|---|---|---|
| Ansatz | 10,8 g | Adipinsäure/Neopentylglykol-Polyester (4:3, SZ = 155) |
| | 0,75 g | Silikontensid (Tegostab B 8404) |
| | 7,9 g | MDI (Desmodur VKS) |
| | | Katalysator |

| Katalysator | Menge (g) | Rohdichte (g/l) | Startzeit (sek) |
|---|---|---|---|
| - erfindungsgemäße Beispiele | | | |
| 1-Methylimidazol | 0,12 | 71.5 | 41 |
| 4-Dimethylaminopyridin (33 %ige Lösung) | 0,36 | 52.9 | 20 |

| - Vergleichsbeispiele | | | |
|---|---|---|---|
| Morpholin | 0,12 | 258.5 | > 200 |
| Pyridin | 0,12 | 141,9 | 120 |

### B: Beispiele zu dem System: mehrwertiges Isocyanat + Carbonsäure + Alkohol

1. Reaktion von Hexamethylendiisocyanat mit Dimerfettsäure VD52 und Desmophen 555 U in Abhängigkeit von tertiären Aminen als Katalysatoren
a) Ausgangsmischung
   - Carbonsäure: 5 g Dimerfettsäure VD 52
   - Alkohol: 10 g Desmophen 550 U
   - Isocyanat: 15 g Hexamethylendiisocyanat
   - Katalysator:Beispiel 1: kein Katalysator (Vergleich)
      Beispiel 2: 1,0 Diethanolamin (Vergleich)
      Beispiel 3: 1,0 g N-Methylimidazol
      Beispiel 4: 1,0 g 4-Pyrrolidinopyridin (heterogene Reaktionsmischung)

| | Beisp.1 | Beisp. 2 | Beisp. 3 | Beisp. 4 |
|---|---|---|---|---|
| b) Temperaturen | | | | |
| Start-Temp. [°C] | 25 | 25 | 25 | 25 |
| Temp. nach 15 Min. | 26 | 34 | 39 | 45 |
| | | | | nach 2 Min. |

| c) | Beisp.1 | Beisp.2 | Beisp.3 | Beisp.4 |
|---|---|---|---|---|
| Aussehen der Mischung | | | | |
| nach 1 Min. | klar | klar | klar | klar |
| | flüssig | flüssig | flüssig Gasblasen | Bodensatz |
| nach 15 Min. | klar | trüb | blasig | |
| | flüssig | flüssig | gelartig | |
| nach 20 Min. | klar | trüb | blasig | |
| | flüssig | flüssig | gelartig | |
| nach 40 Min. | klar | trüb | blasig | |
| | flüssig | flüssig | gelartig | |
| nach 24 h | - | - | harte Masse, schaumig | harte Masse schaumig |

| d) CO₂-Entwicklung | | | | |
|---|---|---|---|---|
| Einsetzen | keine | keine | 1 Min. | 1 Min. |
| Ende | - | - | 20 Min. | 4 Min. |

2. Rohdichten von PUR-Schäumen in Abhängigkeit vom Katalysator
a) Ausgangsmischung
   - Alkohol: 10 g (24 mmol) Desmophen 550 U
   - Carbonsäure: 10 g (36 mmol) Ölsäure (EDENOR NRA)
   - Schaumstabilisator: 0,2 g Silicontensid
   - Isocyanat: 15 g Desmodur VKS (MDI)
   - Katalysator: 5,4 mmol Katalysator
      Beisp. 5: 1,0 g Tributylamin (Vergleich)
      Beisp. 6: 0,7 g 4-Dimethylaminopyridin
      Beisp. 7: 0,5 g N-Methylimidazol
      Beisp. 8: 96 g Diethanolamin (Vergleich)
      Beisp. 9: 0,8 g 4-Pyrrolidinopyridin
      Beisp.10: kein Katalysator (Vergleich)

Die Komponenten wurden nacheinander zusammengegeben und sorgfältig vermischt (Temp.: Raumtemperatur 24 °C).

| Beispiel | 5 | 6 | 7 | 8 | 9 | 10 |
|---|---|---|---|---|---|---|
| b) Rohdichte [g/l] | 126 | 41 | 60 | 650 | 44 | 780 |
| c) Säurezahl | | | | | | |
| im Schaum | 20 | 3 | 21 | - | 5 | - |

3. Produktzusammensetzung in Abhängigkeit vom Katalysator Folgende Komponenten wurden nacheinander zusammengegeben und sorgfältig vermischt (Temp.: Raumtemperatur 24 °C). Die Reaktionsmischung wurde nach einer Reaktionszeit von ca. 10 Min. gaschromatographisch untersucht.
a) Ausgangsmischung
- Carbonsäure: 1,4 g Caprylsäure
- Alkohol: 1,3 g 2-Octanol
- Isocyanat: 2,4 g Phenylisocyanat
- Katalysator:
   Beisp. 11: 3 mmol Tributylamin (Vergleich)
   Beisp. 12: 3 mmol N-Methylimidazol

| Beisp. | 11 | 12 |
|---|---|---|
| CO₂-Entwicklung | schwach | stark |
| Ester[Flächen %] | 0 | 16 |
| Amid[Flächen %] | 23 | 28 |
| Urethan[Flächen %] | 31 | 18 |
| Restsäure[Flächen %] | 13 | 0 |

4. Rohdichte und Säurezahl in Abhängigkeit von der Carbonsäure und dem Katalysator
- Carbonsäure: 20 mmol (COOH)
- Alkohol: 60 mmol (OH) 8,48 g TMP x 5 PO (Desmophen 550 U)
- Stabilisator: 0,52 g Silikontensid
- Isocyanat: 83 mmol (NCO), 11,28 g MDI (Desmodur VKS)
- Katalysator: 2 mmol

a) Ameisensäure (0,92 g)

| Katalysator | Menge (g) | Rohdichte (g/l) | Säurezahl |
|---|---|---|---|
| - erfindungsgemäße Beispiele | | | |
| 1-Methylimidazol | 0,16 | 35,9 | 5,3 |
| 4-Dimethylaminopyridin | 0,24 | 40,4 | 6,1 |
| 4-Pyrrolidinopyridin | 0,30 | 43,2 | 2,0 |

| - Vergleichsbeispiele | | | |
|---|---|---|---|
| Tributylamin | 0,37 | 25,4 | 7,9 |
| Dimethylbenzylamin | 0,27 | 25,2 | 1,3 |

b) Essigsäure (1,20 g)

| Katalysator | Menge (g) | Rohdichte (g/l) | Säurezahl |
|---|---|---|---|
| - erfindungsgemäße Beispiele | | | |
| 1-Methylimidazol | 0,16 | 40,8 | 1,7 |
| 4-Dimethylaminopyridin | 0,24 | 48,6 | 4,1 |
| 4-Pyrrolidinopyridin | 0,30 | 48,9 | 6,8 |

| - Vergleichsbeispiele | | | |
|---|---|---|---|
| Tributylamin | 0,37 | 222,8 | 38,8 |
| Dimethylbenzylamin | 0,27 | 162,0 | 52,2 |

c) Caprylsäure (2,88 g)

| Katalysator | Menge (g) | Rohdichte (g/l) | Säurezahl | visuelle Beurteilung |
|---|---|---|---|---|
| - erfindungsgemäße Beispiele | | | | |
| 1-Methylimidazol | 0,16 | 52,4 | | hart, mischporig |
| 4-Dimethylaminopyridin | 0,24 | 42,5 | 5,7 | hart, feinporig |
| 4-Pyrrolidinopyridin | 0,30 | 50,8 | 6,5 | hart, feinporig |

| - Vergleichsbeispiele | | | | |
|---|---|---|---|---|
| Triethylendiamin 33 proz. in Dipropylenglykol | 0,68 | 73,9 | 16,2 | hart, mischporig |
| Triethylamin | 0,2 | 159,9 | 41,6 | hart, mischporig |

d) Rübölfettsäure (erucasäurearm) 5,64 g

| Katalysator | Menge (g) | Rohdichte (g/l) | visuelle Beurteilung |
|---|---|---|---|
| - erfindungsgemäße Beispiele | | | |
| 1-Methylimidazol | 0,16 | 67,8 | hart, mischporig |
| 4-Dimethylaminopyridin | 0,24 | 67,9 | weich, feinporig |
| 4-Pyrrolidinopyridin | 0,30 | 67,3 | weich, feinporig |
| 1-(3-Aminopropyl)-imidazol | 0,25 | 66,8 | hart, mischporig |
| Pyrimidazol | 0,24 | 82,7 | hart, mischporig |

| - Vergleichsbeispiele | | | |
|---|---|---|---|
| Triethylendiamin 33%ig in Dipropylenglycol | 0,68 | 103,9 | hart, mischporig |

e)

| | Menge | OH-Zahl | Säurezahl |
|---|---|---|---|
| - erfindungsgemäßes Beispiel | | | |
| Triethanolamin | 2,98 | 1130 | 0 |
| Rapsfettsäure | 5,56 | 0 | 200 |
| Mischung | 8,54 g | 394 | 130 |
| MDI (Desmodur VKS) | 11,75 g | (5 % Überschuß) | |
| 1-Methylimidazol | 0,13 g | | |
| Tegostab B 8484 | 0,41 g | | |
| Gesamtgewicht: | 20,83 g | | |
| theor. Rohdichte: | 46,81 g/l | | |

feinzelliger Hartschaum, Rohdichte: 50 g/l, sehr gute mechanische Eigenschaften, extrem schnelle Reaktionszeit
f)

| | Menge | OH-Zahl | Säurezahl |
|---|---|---|---|
| - erfindungsgemäßes Beispiel | | | |
| Komplexester Adipinsäure/glycerin | 3,30 | 63 | 304 |
| Glycerin x 7 EO | 6,70 g | 400 | |
| Mischung | 10,00 g | 289 | 100 |
| MDI (Desmodur VKS) | 10,00 g | | |
| 1-Methylimidazol | 0,21 g | | |
| Tegostab B 8404 | 0,42 g | | |
| Gesamtgewicht: | 20,63 g | | |
| theor. Rohdichte: | 54,00 g/l | | |

feinzelliger Hartschaum, Rohdichte: 56 g/l

### Anmerkung:

Tegostab B 8404 ist eine Warenbezeichnung für einen Schaumstabilisator für PUR-Schaum auf der Basis eines Polysiloxan-Polyether-Copolymer (Fa. Goldschmidt)

### C: Beispiele zu dem System: mehrwertiges Isocyanat + Polyhydroxycarbonsäure

Allgemeine Anmerkungen zu den Ausführungsbeispielen:
In einem üblichen konischen Kunststoffgefäß von 220 ml Inhalt wurden die Ausgangsstoffe unmittelbar nacheinander eingewogen und unmittelbar nach der letzten Zugabe von Hand oder mit einem hochtourigen Rührer ca. 10 sec lang gemischt. Die angegebenen Mengen in den Rezepturen stellen Gewichtsteile in Gramm dar. Das molare Verhältnis von Isocyanat-Gruppen (NCO) zu Gruppen mit aktivem Wasserstoff (AKH) ist - soweit erforderlich - in den Tabellen aufgeführt. Die Raumtemperatur betrug bei allen Versuchen 22 ± 2°C. Die Reaktion war nach 2 Stunden bei Raumtemperatur praktisch beendet. Die Prüfungen wurden nach 24 Stunden vorgenommen. Die in den Beispielen aufgeführten Prüfergebnisse beziehen sich, sofern nicht anders angegben, auf eine Prüftemperatur von 22 ± 2 °C.
a) Als Isocyanat wurde technisches, bei Raumtemperatur flüssiges Polyisocyanatgemisch der Diphenylmethanreihe mit einem NCO-Gehalt von 31,0 Gew. % (Handelsname "Desmodur 44 V 10" der Bayer AG; in den Beispielen als "MDI" bezeichnet) eingesetzt.
b) Bei den Polyolen handelt es sich um Umsetzungsprodukte von technisch verfügbaren epoxidierten Fettsäureestern mit mehrfunktionellen Alkoholen.
   In der Nomenklatur der Polyhydroxyfettsäuren bedeuten:
   - Der 1. Buchstabe gibt die Art des Ausgangsepoxides an:
      E = Epoxystearinsäuremethylester
   - Der 2. Buchstabe gibt die Art des Reaktionspartners an:
      E: Ethylenglykol
      Z: Zitronensäure
   - Die 1. Zifferngruppe gibt mit 3 Ziffern die OH-Zahl in mg KOH/g an.
   - Die 2. Zifferngruppe gibt mit 3 Ziffern die Säurezahl in mg KOH/g an.

### Herstellung von EZ-XOO-158

192 g (0,8 Mol) Zitronensäure und 100 g Epoxystearinsäuremethylester (Ep.-0 = 4,7 %) wurden vorgelegt, unter Rühren auf 150°C erwärmt und innterhalb von 20 Min. mit weiteren 240 g Epoxystearin (insgesamt 1 Mol) versetzt. In einer exothermen Reaktion (bis 170 °C) sank der Ep.-Wert im Gemisch auf 0,03 % Ep.-0.
SZ = 158, OHZ nicht bestimmbar.

### Herstellung von EE-158-173

1 427 g (4,2 Mol) Epoxystearinsäuremethylester (Ep.-0 = 4,7 %) und 130 g (2,1 Mol) Ethylenglykol wurden in Gegenwart von 4,6 g konzentrierter Schwefelsäure unter Rühren auf 105 °C erhitzt. Die Reaktion war nach 3 Stunden beendet (Ep.-0 = 0,19 %). Die Katalysatorsäure wurde mit 4,6 g Diethylethanolamin neutralisiert. Das Ringöffnungsprodukt wurde dann mit 1 440 g 15 %iger Natronlauge bei 90 °C verseift (Reaktionszeit 2 Stunden). Danach wurden bei 60 °C 755 g 35 %ige Schwefelsäure zugegeben und die organische Phase zweimal mit Wasser gewaschen und im Vakuum getrocknet. Das Produkt ist eine gelbliche Flüssigkeit (SZ = 173, VZ = 176, OHZ = 158).

### Herstellung von EE-253-153

53 kg Epoxystearinsäuremethylester (Ep.-0 = 4,7 %) und 19,3 kg Ethylenglykol wurden in Gegenwart von 17 g konzentrierter Schwefelsäure unter Rühren auf 90 °C erhitzt. Die anfangs exotherme Reaktion war nach 1,5 Stunden beendet (Ep.-0 = 0,03 %). Die Katalysatorsäure wurde mit 88 g 30 %iger methanolischer Natriummethylatlösung neutralisiert und das Rohprodukt im Vakuum bis 200 °C andestilliert (15,5 kg Destillat). Man erhielt so eine gelbe, klare Flüssigkeit (OHZ = 235, VZ = 159, SZ = 0,1).

53 kg des Ringöffnungsprodukts von Epoxystearinsäuremethylester mit Glykol wurden mit 13,5 kg 50 %iger Natronlauge und 20 kg Wasser bei 90 °C verseift (Reaktionszeit ca. 3 Stunden). Danach wurden bei 60 °C 23,6 kg 35 %ige Schwefelsäure zugegeben und die organische Phase zweimal mit Wasser gewaschen und im Vakuum getrocknet. Das Produkt (46,7 kg) ist eine gelbliche Flüssigkeit (SZ = 153, VZ = 162, OHZ = 253).
c) In den beschriebenen Beispielen wurde als Schaumstabilisator ein hydrolysestabiles Polysiloxan-Polyoxyalkylen-Copolymer mit einer Viskosität von 600 mPas (20°C) und einer OH-Zahl von 52 verwendet. Handelsbezeichnung "Tegostab B-8404" der Fa. Goldschmidt.
d) In den Beispielen werden die verwendeten Katalysatoren mit einer Kurzbezeichnung aufgeführt. In der nachfolgenden Tabelle sind die Kurzbezeichnungen und - soweit bekannt - die chemischen Bezeichnungen der Katalysatoren aufgeführt. Bei handelsüblichen Katalysatoren, deren Struktur nicht bekannt ist, oder bei Katalysatorgemischen wird anstelle der chem. Bezeichnung der Handelsname und der Hersteller aufgeführt. Es bedeuten:

| | |
|---|---|
| DMDEE | 2,2'-Dimorpholinodiethylether (Vergleich) |
| NMI | N-Methylimidazol |
| DP-914 | Texacat DP-914; (Zubereitung von aliphatischen |
| | Aminen in Dipropylenglykol; CAS-Nr. 25265-71-8) |
| | Texaco Chemical (Vergleich) |

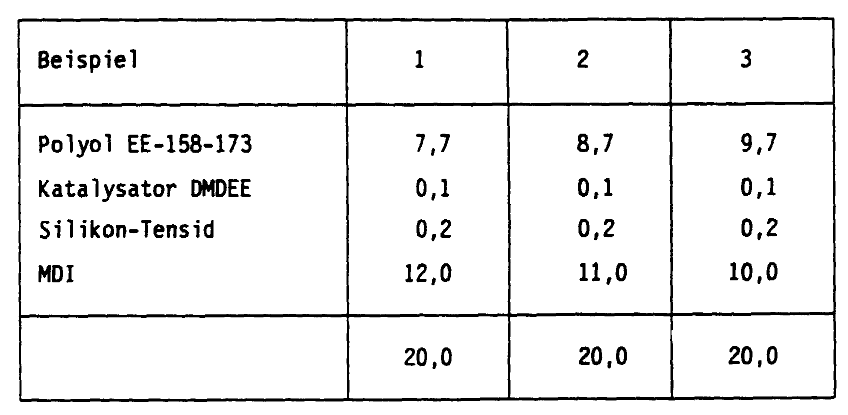

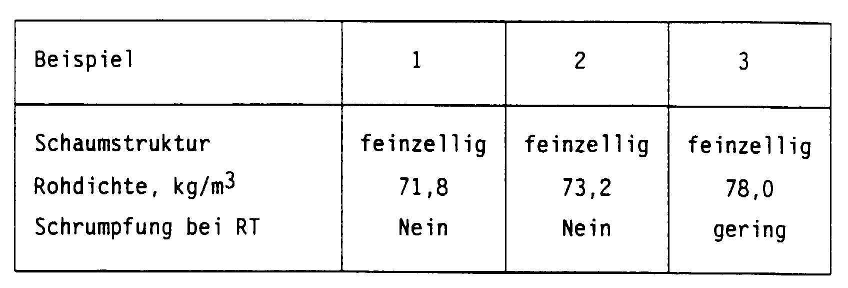

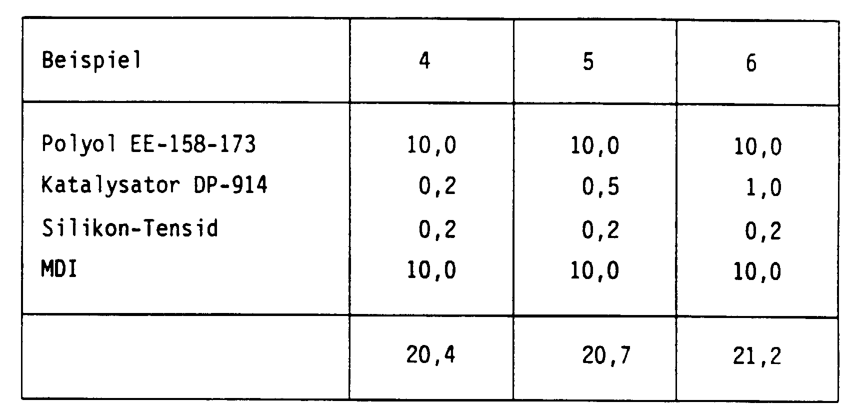

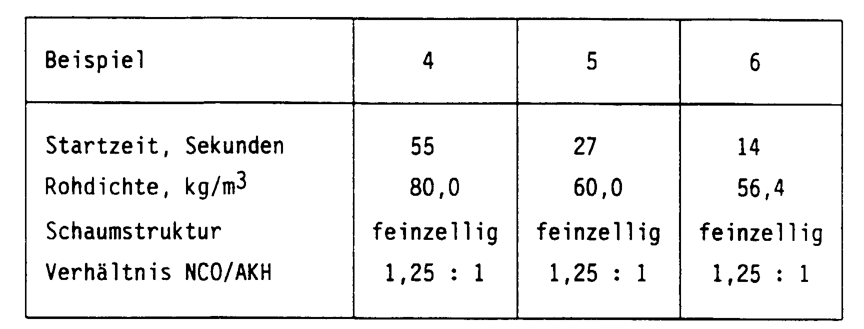

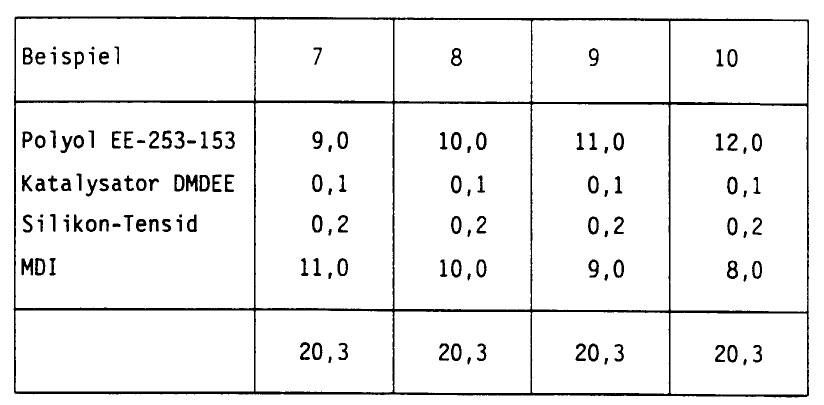

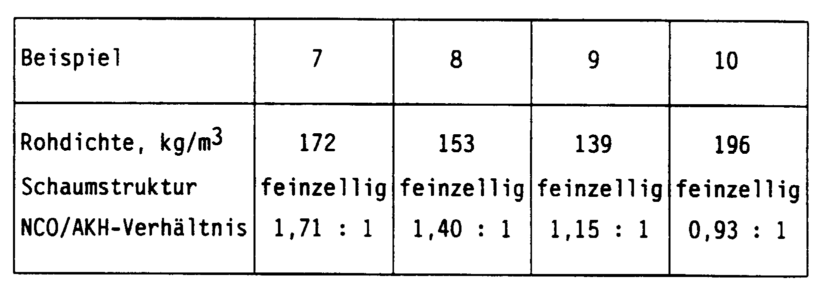

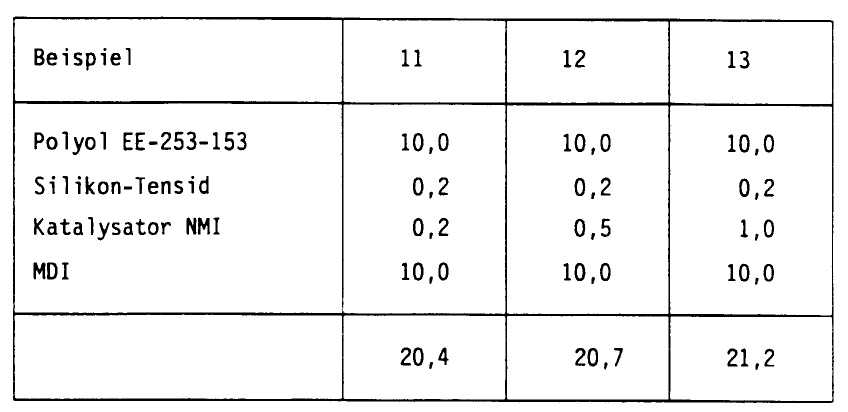

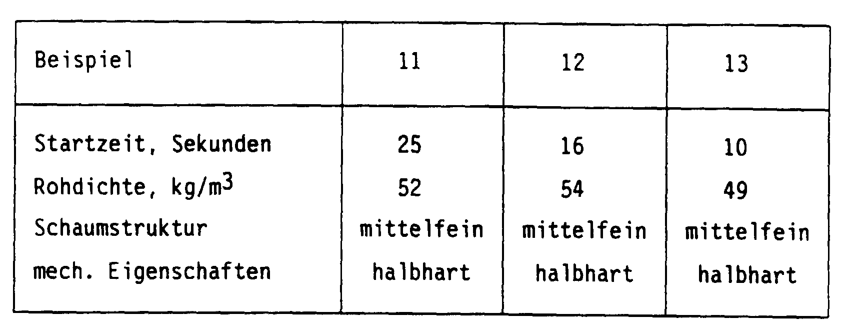

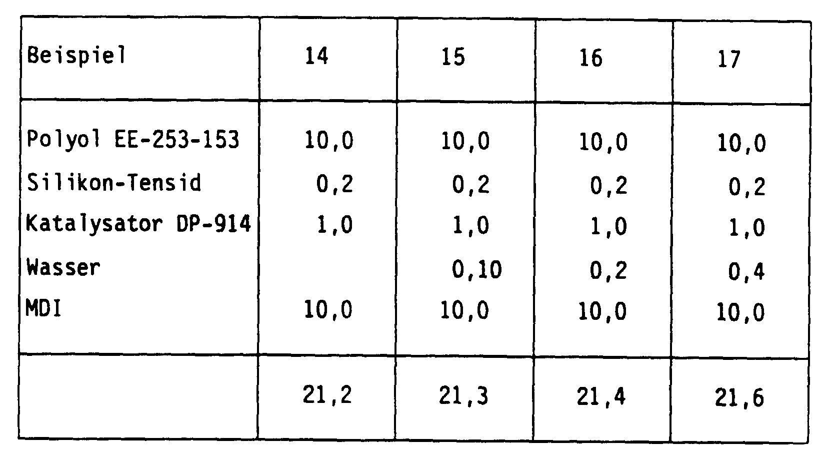

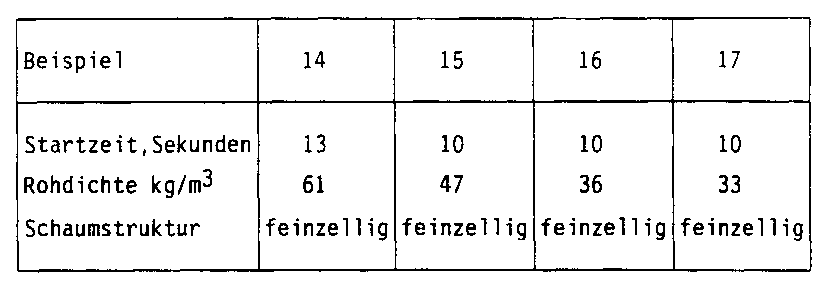

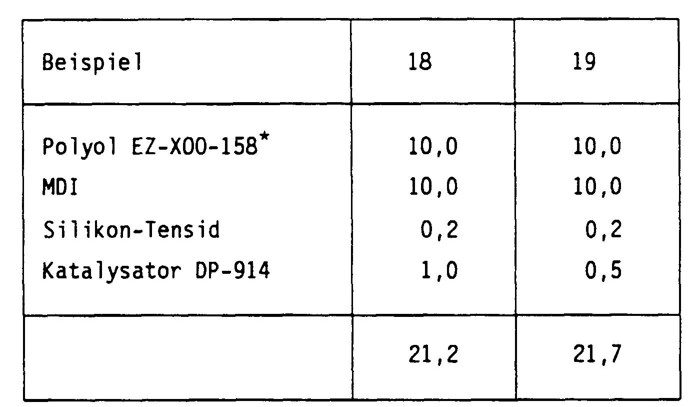

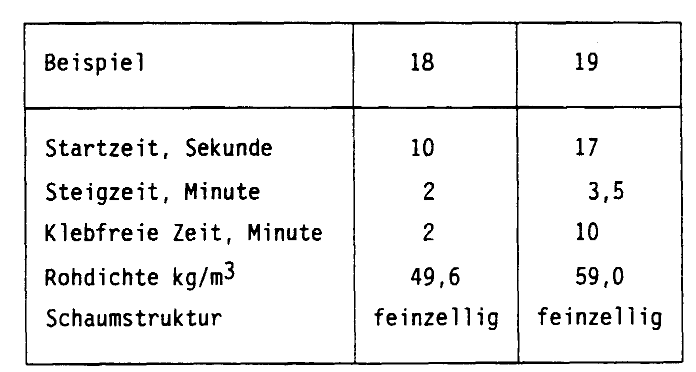

### Anmerkungen zu den Tabellen

- Die Komponenten sind in Gewichtsteilen angegeben.
- Die erfindungsgemäßen Schaumstoffe sind elfenbeinfarbig bis nahezu weiß.
- * OH-Zahl nicht bestimmbar nach Standard-Methode

## Patentansprüche

1. Verfahren zur Herstellung von thermoplastischen oder duroplastischen Kunststoffen mit Amid-Gruppen durch katalytische Umsetzung von
A) mehrwertigen aliphatischen, cycloaliphatischen oder aromatischen Isocyanaten und/oder daraus hergestellten oligomerisierten Produkten mit NCO-Endgruppen mit
B) Carbonsäuren sowie gegebenenfalls
C) Alkoholen oder mehrwertigen primären oder sekundären Aminen,
wobei zumindest B) oder C) mehrwertig sein muß und/oder B) und C) zu einer Hydroxycarbonsäure bzw. Aminocarbonsäure verbunden sind, unter Bildung von CO₂, bei Temperaturen von unter 100 °C in Gegenwart von tertiären Aminen als Katalysator, gekennzeichnet durch Amino-substituierte Pyridine und/oder N-substituierte Imidazole als tertiäre Amine.

2. Verfahren nach Anspruch 1, gekennzeichnet durch eine Temperatur von unter 50 °C beim Mischen der Reaktanten bzw. beim Erwärmen des Ausgangsgemisches.

3. Verfahren nach einem der Ansprüche 1 oder 2, gekennzeichnet durch eine Reaktionszeit von weniger als 24 Stunden, angefangen vom Mischen der Reaktanten bis zur praktisch vollständigen Aushärtung.

4. Verfahren nach mindestens einem der Ansprüche 1 bis 3, gekennzeichnet durch Carbonsäuren mit mindestens 2 C-Atomen.

5. Verfahren nach mindestens einem der Ansprüche 1 bis 4, gekennzeichnet durch Hydroxycarbonsäuren mit von 2 bis 600 C-Atomen.

6. Verfahren nach Anspruch 5, dadurch gekennzeichnet, daß die Polyhydroxycarbonsäuren durch Ringöffnung von epoxidierten, ungesättigten Fettsäureestern mit hydroxylgruppenhaltigen Verbindungen sowie erforderlichenfalls anschließender Verseifung herstellbar sind.

7. Verfahren nach Anspruch 6, dadurch gekennzeichnet, daß das zur Ringöffnung verwendete Diol 1,2-Ethandiol, 1,2-Butandiol, 1,6-Hexandiol, Polypropylenglykol, Polybutadiendiol und/oder Polyethylenglykol mit einem Polymerisationsgrad von 2 bis 40 ist.

8. Verfahren nach den Ansprüchen 6 oder 7, dadurch gekennzeichnet, daß die epoxidierten ungesättigten Fettsäuren bzw. Fettsäuregemische eine Kettenlänge von 8 bis 100 C-Atomen aufweisen und vorzugsweise in einem Gemisch vorliegen.

9. Verfahren nach mindestens einem der Ansprüche 1 bis 8, gekennzeichnet durch aromatische mehrwertige Isocyanate und/oder oligomerisierte NCO-endständige Aufbauprodukte.

10. Verfahren nach mindestens einem der Ansprüche 1 bis 9, dadurch gekennzeichnet, daß- für den Fall, daß die Isocyanate nur mit Carbonsäuren umgesetzt werden - auf 1 Äquivalent-lsocyanat 0,1 bis 4 Äquivalente Carbonsäure und 0,001 bis 0,1 Äquivalente tertiäres Amin eingesetzt werden.

11. Verfahren nach mindestens einem der Ansprüche 1 bis 9, dadurch gekennzeichnet, daß - für den Fall, daß die Isocyanate mit Carbonsäuren und Alkoholen umgesetzt werden - auf 1 Äquivalent-lsocyanat 0,1 bis 2 Äquivalente einer Mischung von Carbonsäure und Alkohol bzw. primärem oder sekundärem Amin oder Aminoalkohol und 0,001 bis 0,1 Äquivalente tert. Amin eingesetzt werden bzw. bis zu 2 Äquivalenten an tertiärem Amin, wenn dieses NCO-reaktive Gruppen enthält, wobei das Verhältnis von Carbonsäure : Alkohol = 1 : 20 bis 20 : 2 ist.

12. Verfahren nach mindestens einem der Ansprüche 1 bis 9, dadurch gekennzeichnet, daß - für den Fall, daß die Isocyanate mit Amino- bzw. Hydroxycarbonsäuren umgesetzt werden - das äquivalente Verhältnis von Isocyanat-Gruppen zu Gruppen mit aktivem Wasserstoff 2 : 1 bis 0,5 : 1 beträgt.

13. Verfahren nach mindestens einem der Ansprüche 1 bis 12, dadurch gekennzeichnet, daß man das Isocyanat, die Carbonsäure und das tertiäre Amin und/oder die Hydroxycarbonsäure bzw. die Aminocarbonsäure sowie gegebenenfalls den Alkohol und das mehrwertige Amin gleichzeitig zusammengibt und dann in völlig offenen Formen oder auf Bandanlagen zu Blöcken oder Sandwich-Elementen verarbeitet.

14. Verfahren nach mindestens einem der Ansprüche 1 bis 12, dadurch gekennzeichnet, daß die Komponenten dosiert und gemischt werden, das reaktive Gemisch in eine weitgehend oder völlig geschlossene Form injiziert wird und dort innerhalb von 24 Stunden aushärtet.

15. Verfahren nach mindestens einem der Ansprüche 1 bis 14, dadurch gekennzeichnet, daß das Reaktionsgemisch sowie vorzugsweise auch die Form eine Temperatur unter 100 °C beim Mischen der Reaktanten hat.

16. Kunststoff, herstellbar nach mindestens einem der Ansprüche 1 bis 15, gekennzeichnet durch eine Säurezahl von weniger als 40.

17. Kunststoff nach Anspruch 16, gekennzeichnet durch Ester-, Harnstoff- und/oder Urethan-Gruppen zusätzlich zu den Amid-Gruppen.

18. Kunststoff nach Anspruch 16 und 17, gekennzeichnet durch seine Rohdichte von allenfalls 25 % unter der des porenfreien Kunststoffes.

19. Kunststoffe nach Anspruch 16 und 17, gekennzeichnet durch eine Rohdichte von höchstens 800 kg/m³ aufgrund ihrer Porenstruktur (Schaumstoff).

20. Verwendung des Kunststoffes nach mindestens einem der Ansprüche 16 bis 19 als bei der Applikationstemperatur expandierender Kleb- und Dichtstoff.

21. Verwendung des Kunststoffes nach Anspruch 19 als Zweikomponenten-Bau- und Montage-Schaumstoff.

22. Verwendung des Kunststoffes nach Anspruch 19 zum Isolieren und Verpacken.

23. Verwendung des Kunststoffes nach Anspruch 19 als Blumensteckschaum.

24. Verwendung des Kunststoffs nach Anspruch 19 als Integralschaumstoff.

25. Verwendung des Kunststoffs nach Anspruch 19 als Blockschaumstoff.

26. Verwendung des Kunststoffs nach mindestens einem der Ansprüche 16 bis 19 zur Herstellung von Gießmassen.

27. Verwendung des Kunststoffs nach mindestens einem der Ansprüche 16 bis 19 zur Beschichtung.

28. Verwendung des Kunststoffs nach mindestens einem der Ansprüche 16 bis 19 zur Herstellung von Spritzgußteilen wie z.B. Tassen, Tellern und Gehäusen oder von Fasern oder Folien.

29. Verwendung des Kunststoffs nach mindestens einem der Ansprüche 16 bis 19 zur Herstellung von offenzelligem Schaumstoff und daraus herstellbaren Filtern.

## Claims

1. A process for the production of thermoplastics or thermosets containing amide groups by catalytic reaction of
A) polyfunctional aliphatic, cycloaliphatic or aromatic isocyanates and/or NCO-terminated oligomerized products produced therefrom with
B) carboxylic acids and, optionally,
C) alcohols or polyfunctional primary or secondary amines, at least B) or C) having to be polyfunctional and/or B) and C) being combined to form a hydroxycarboxylic acid or aminocarboxylic acid,
at temperatures below 100°C in the presence of tertiary amines as catalyst, the reaction being accompanied by elimination of CO₂, characterized by amino-substituted pyridines and/or N-substituted imidazoles as the tertiary amines.

2. A process as claimed in claim 1, characterized by a temperature below 50°C during mixing of the reactants or during heating of the starting mixture.

3. A process as claimed in claim 1 or 2, characterized by a reaction time of less than 24 hours starting from the mixing of the reactants to substantially complete curing.

4. A process as claimed in at least one of claims 1 to 3, characterized by carboxylic acids containing at least 2 carbon atoms.

5. A process as claimed in at least one of claims 1 to 4, characterized by hydroxycarboxylic acids containing 2 to 600 carbon atoms.

6. A process as claimed in claim 5, characterized in that the polyhydroxycarboxylic acids are obtainable by ring-opening of epoxidized unsaturated fatty acid esters with hydroxyfunctional compounds and optionally subsequent saponification.

7. A process as claimed in claim 6, characterized in that the diol used for ring opening is ethane-1,2-diol, butane-1,2-diol, hexane-1,6-diol, polypropylene glycol, polybutadiene diol and/or polyethylene glycol having a degree of polymerization of 2 to 40.

8. A process as daimed in claim 6 or 7, characterized in that the epoxidized unsaturated fatty acids or fatty acid mixtures have a chain length of 8 to 100 carbon atoms and are preferably present in the form of a mixture.

9. A process as claimed in at least one of claims 1 to 8, characterized by aromatic polyfunctional isocyanates and/or NCO-terminated oligomerized synthesis products.

10. A process as claimed in at least one of claims 1 to 9, characterized in that, where the isocyanates are only reacted with carboxylic acids, 0.1 to 4 equivalents carboxylic acid and 0.001 to 0.1 equivalent tertiary amine are used to 1 equivalent isocyanate.

11. A process as claimed in at least one of claims 1 to 9, characterized in that, where the isocyanates are reacted with carboxylic acids and alcohols, 0.1 to 2 equivalents of a mixture of carboxylic acid and alcohol or primary or secondary amine or aminoalcohol and 0.001 to 0.1 equivalent tertiary amine or up to 2 equivalents tertiary amine where it contains NCO-reactive groups are used to 1 equivalent isocyanate, the ratio of carboxylic acid to alcohol being 1:20 to 20:1.

12. A process as claimed in at least one of claims 1 to 9, characterized in that, where the isocyanates are reacted with amino- or hydroxycarboxylic acids - the equivalent ratio of isocyanate groups to groups containing active hydrogen is 2:1 to 0.5:1.

13. A process as claimed in at least one of claims 1 to 12, characterized in that the isocyanate, the carboxylic acid and the tertiary amine and/or the hydroxycarboxylic acid or the aminocarboxylic acid and, optionally, the alcohol and the polyfunctional amine are combined simultaneously and then processed in completely open moulds or on belts to form slabs or sandwich elements.

14. A process as claimed in at least one of claims 1 to 12, characterized in that the components are rapidly metered and mixed, the reactive mixture is injected into a substantially or completely closed mould and cures therein over a period of 24 hours.

15. A process as claimed in at least one of claims 1 to 14, characterized in that the reaction mixture and preferably the mould have a temperature below 100°C during mixing of the reactants.

16. A plastic obtainable by the process claimed in at least one of claims 1 to 15, characterized by an acid value of less than 40.

17. A plastic as claimed in claim 16, characterized by ester, urea and/or urethane groups in addition to the amide groups.

18. A plastic as claimed in claim 16 or 17, characterized by a density at best 25% below that of the non-porous plastic.

19. Plastics as claimed in claim 16 or 17, characterized by a density of at most 800 kg/m³ by virtue of their cell structure (foam).

20. The use of the plastic claimed in at least one of claims 16 to 19 as an adhesive and sealing compound which expands at the application temperature.

21. The use of the plastic claimed in claim 19 as a two-component structural and assembly foam.

22. The use of the plastic claimed in claim 19 for insulation and packaging.

23. The use of the plastic claimed in claim 19 as a flower arrangement foam.

24. The use of the plastic claimed in claim 19 as an integral foam.

25. The use of the plastic claimed in claim 19 as a slabstock foam.

26. The use of the plastic claimed in at least one of claims 16 to 19 for the production of casting compounds.

27. The use of the plastic claimed in at least one of claims 16 to 19 for coating.

28. The use of the plastic claimed in at least one of claims 16 to 19 for the production of injection-moulded articles, such as for example cups, saucers and housings, or fibres or films.

29. The use of the plastic claimed in at least one of claims 16 to 19 for the production of open-cell foams and filters obtainable therefrom.

## Revendications

1. Procédé de fabrication de matières plastiques thermoplastiques ou thermodurcissables ayant des groupes amide, par réaction catalytique de :
A) des isocyanates plurivalents, aliphatiques cycloaliphatiques, ou aromatiques et/ou les produits oligomérisés produits à partir de ceux-ci ayant des groupes terminaux NCO avec,
B) des acides carboxyliques ainsi qu'éventuellement,
C) des alcools ou des amines plurivalents primaires ou secondaires,
dans lesquels au moins B) ou C) doit être plurivalent et/ou B) et C) sont reliés à un acide hydroxycarboxylique ou à un acide aminocarboxylique avec formation de CO₂, à des températures inférieures à 100°C en présence d'amines tertiaires comme catalyseur,
caractérisé par
des pyridine substitués par un groupe amine et/ou des imidazoles N-substitués comme amine tertiaire.

2. Procédé selon la revendication 1,
caractérisé par
une température de moins de 50°C par mélange des réactifs ou par chauffage du mélange de départ.

3. Procédé selon l'une des revendications 1 ou 2,
caractérisé par
une durée de réaction de moins de 24 heures, commencée à partir du mélange des réactifs jusqu'au durcissement pratiquement complet.

4. Procédé selon au moins une des revendications 1 à 3,
caractérisé par
des acides carboxyliques ayant au moins 2 atomes de carbone.

5. Procédé selon au moins une des revendications 1 à 4,
caractérisé par
des acides hydroxycarboxyliques ayant de 2 à 600 atomes de carbone.

6. Procédé selon la revendication 5,
caractérisé en ce que
les acides polyhydroxycarboxyliques peuvent être fabriqués par ouverture de cycle d'esters d'acide gras non saturés epoxydés, avec des composés porteurs de groupes hydroxyle ainsi qu'en cas de nécessité une saponification consécutive.

7. Procédé selon la revendication 6,
caractérisé en ce que
le diol utilisé pour l'ouverture de cycle est le 1,2-éthanediol, le 1,2-butanediol, le 1,6-hexanediol, le polypropylèneglycol, le polybutadiènediol et/ou le polyéthylèneglycol avec un degré de polymérisation de 2 à 40.

8. Procédé selon les revendications 6 ou 7,
caractérisé en ce que
les acides gras ou les mélanges d'acides gras non saturés epoxydés possèdent une longueur de chaîne de 8 à 100 atomes de carbone et se présentent de préférence sous forme d'un mélange.

9. Procédé selon au moins une des revendications 1 à 8,
caractérisé par
des isocyanates plurivalents aromatiques et/ou des produits de structure oligomérisés à groupe NCO terminal.

10. Procédé selon au moins une des revendications 1 à 9,
caracterisé en ce que
pour le cas où les isocyanates seraient mis à réagir seulement avec des acides carboxyliques, on met en oeuvre pour 1 équivalent d'isocyanate, de 0,1 à 4 équivalents d'acide carboxylique et de 0,001 à 0,1 équivalent d'amine tertiaire.

11. Procédé selon au moins une des revendications 1 à 9,
caractérisé en ce qu'
au cas où les isocyanates sont mis à réagir avec des acides carboxyliques et des alcools,
on met en oeuvre pour 1 équivalent d'isocyanate, de 0,1 à 2 équivalents d'un mélange d'acide carboxylique et d'alcool ou d'amine primaire ou secondaire ou d'amino alcool, et de 0,001 à 0,1 équivalent d'amine tertiaire ou jusqu'à 2 équivalents d'amine tertiaire lorsque celle-ci renferme des groupes réactifs ou NCO, pour laquelle le rapport de l'acide carboxylique : alcool est égal de 1 : 20 à 20 : 2.

12. Procédé selon au moins une des revendications 1 à 9,
caractérisé en ce que
pour le cas ou les isocyanates sont mis à réagir avec des acides amino, ou hydroxycarboxyliques, le rapport en équivalents des groupes isocyanates aux groupes ayant un hydrogène actif s'élève de 2 : 1 à 5 : 1.

13. Procédé selon au moins une des revendications 1 à 12,
caractérisé en ce qu'
on verse simultanément l'isocyanate, l'acide carboxylique et l'amine tertiaire et/ou l'acide hydroxy carboxylique ou l'acide aminocarboxylique ainsi qu'éventuellement l'alcool et l'amine plurivalente, et ensuite on façonne dans des moules complètement ouverts ou sur des installations à bande en des blocs ou des éléments sandwich.

14. Procédé selon au moins une des revendications 1 à 12,
caractérisé en ce que
les composants sont admis par doses et mélangés et en ce que le mélange réactif est injecté dans un moule principalement ou complètement fermé et là est durci en l'espace de 24 heures.

15. Procédé selon au moins une des revendications 1 à 14,
caractérisé en ce que
le mélange réactionnel ainsi que de préférence aussi le moule ont une température en dessous de 100°C par mélange des réactifs.

16. Matière plastique que l'on peut produire selon au moins une des revendications 1 à 15,
caractérisée par
un indice d'acide de moins de 40.

17. Matière plastique que l'on peut produire selon la revendication 16,
caractérisée par
des groupes ester, urée et/ou uréthane en supplément des groupes amides.

18. Matière plastique selon la revendication 16 et 17,
caractérisée par
sa densité brute de 25 % en dessous de celle de la matière plastique dépourvue de pore.

19. Matière plastique selon la revendication 16 et 17,
caractérisée par
une densité brute de au maximum 800 kg/m³ en raison de sa structure de pores (mousse).

20. Utilisation de matière plastique selon au moins une des revendications 16 à 19, en tant que colle et substance d'étanchéité qui se dilate à la température d'application.

21. Utilisation de la matière plastique selon la revendication 19, en tant que mousse à deux composant de construction et d'assemblage.

22. Utilisation de la matière plastique selon la revendication 19 pour l'isolation et pour l'emballage.

23. Utilisation de la matière plastique selon la revendication 19, en tant que mousse de connexion pour fleurs.

24. Utilisation de la matière plastique selon la revendication 19, en tant que mousse à peau intégrée.

25. Utilisation de la matière plastique selon la revendication 19 en tant que mousse en blocs.

26. Utilisation de la matière plastique selon au moins une des revendications 16 à 19 pour la fabrication de masses de coulée.

27. Utilisation de la matière plastique selon au moins une des revendications 16 à 19, pour le revêtement.

28. Utilisation de la matière plastique selon au moins une des revendications 16 à 19, en vue de la fabrication de pièces de moulage par injection comme par exemple des tasses, des assiettes et des boîtiers ou de fibres ou de feuilles.

29. Utilisation de la matière plastique selon au moins une des revendications 16 à 19, en vue de la fabrication de mousse à alvéoles ouvertes et des fibres que l'on peut préparer à partir de celle-ci.
